# FASCICULE DE BREVET EUROPEEN

(11) **EP 2 251 634 B1**
(45) Date de publication et mention de la délivrance du brevet: **28.11.2018**
(21) Numéro de dépôt: 09160174.0
(22) Date de dépôt: 13.05.2009
(51) Int. Cl.: G01B 5/008

(54) **Instrument de mesure de dimension consistant en une colonne de mesure verticale**
Instrument zur Messung von Abmessungen bestehend aus einer vertikalen Messsäule
Dimension measuring instrument consisting in a vertical measurement column

(43) Date de publication de la demande: 17.11.2010
(73) Titulaire: TESA SA, 1020 Renens (CH)
(72) Inventeur: Biselx, Frédéric, 1020 Renens (CH)
(74) Mandataire: P&TS SA (AG, Ltd.)

(56) Documents cités:
- EP-A- 0 579 961
- EP-A- 1 847 798
- DE-A1- 3 719 509
- US-A- 4 924 598
- US-A1- 2004 221 465

## Description

### Domaine technique

La présente invention concerne un instrument de mesure de dimension selon un axe linéaire, en particulier, mais pas exclusivement, un instrument de mesure de dimensions linéaires selon un axe de mesure verticale et horizontale.

### Etat de la technique

Les instruments de mesure tels que les colonnes de mesure verticales et les machines de mesure de coordonnées sont utilisés pour la mesure et le contrôle dimensionnel de pièces mécaniques de haute précision. Ils livrent des mesures dont la précision et la répétabilité sont de l'ordre du micromètre.

Ces instruments permettent d'effectuer des mesures relatives et aussi des mesures absolues. Généralement ils sont associés à une table plane horizontale ou à un banc de mesure sur lequel est disposée la pièce à mesurer ou à contrôler, dans une position choisie, de telle sorte que cet élément commun constitue un plan de référence entre l'appareil et la pièce à mesurer.

Habituellement les appareils de mesure de dimension, comprennent trois guides orientées parallèlement à trois axes de coordonnées rectangulaires. Dans le cas d'une colonne de mesure verticale deux de ces axes sont ignorés car ils sont inscrits dans le plan du banc de mesure et un guide orienté perpendiculairement au plan du banc de mesure constitue un axe de mesure vertical. Il est aussi envisageable de réaliser d'autres configurations permettant de mesurer selon un des autres axe considérant que les deux autres axes définissent le plan de référence.

Ces appareils sont destinés à mesurer des pièces réalisées dans des matériaux rigides dont la déformation sous l'effet d'une force est considérée comme nulle. Ceci limite le champ d'application de ces appareils.

Sur les colonnes de mesure, le guide est fixé verticalement sur une base rigide comportant une semelle d'appui déplaçable par glissement, ou sur un coussin d'air, sur le banc de mesure, de manière à pouvoir accéder à toutes les cotes des faces latérales de la pièce à mesurer.

Les instruments de mesure disposent généralement aussi, sur chaque axe de mesure, d'une référence de position fixe, d'un encodeur de position de haute précision, ainsi que d'un dispositif électronique de contrôle et d'affichage, éventuellement contenu dans un pupitre visible par l'opérateur, pour l'affichage des dimensions relevées selon un ou plusieurs modes de mesure.

Le brevet européen EP0579961 au nom de la demanderesse décrit une colonne de mesure verticale avec un chariot de mesure, coulissant sur un guide vertical. Le chariot de mesure comporte un chariot d'entraînement "flottant", coulissant relativement au chariot de mesure, qui transmet la force verticale agissant sur le chariot de mesure. Dans cet instrument la liaison entre le chariot de mesure et le chariot d'entraînement est élastique : Un système de ressorts ajustés reliant les deux chariots reprend, et en même temps permet de garantir une force minimale de contact agissant sur le chariot de mesure pour déterminer le sens de la mesure et assurer un bon contact avec la pièce à mesurer.

On connaît, d'autres colonnes de mesures avec un dispositif d'application de force similaire, par exemple par les documents CH667726, EP1847798, et EP0223736. Les dispositifs de ces documents comprennent un élément de transmission élastique entre le moteur d'entraînement et la touche de mesure, et sont arrangées pour effectuer des mesures de dimension lorsque la déformation de l'élément élastique atteint une valeur prédéterminée et donc, la force d'appui de la touche sur la pièce à mesurer est approchante de cette valeur prédéterminée.

On connaît aussi des dispositifs, par exemple le brevet US4924598, dans lequel on n'effectue pas de mesure continue de la déflection de l'élément élastique qui transmet la force de mesure à la touche, mais on détecte simplement le dépassement d'un seuil de déformation par un contact électrique. Ce dispositif plus simple ne permet par contre pas d'évaluer un dépassement de force lors de la mesure. De plus ce dispositif ne permet pas de modifier les conditions de mesure et notamment varier ou corriger la force d'appui de la touche lors de la mesure.

Dans tous les dispositifs connus basés sur la mesure de la déformation dimensionnelle d'un élément élastique, celle-ci est déterminée généralement par un capteur de déplacement comme par exemple un potentiomètre électrique donnant une information de position relative entre deux chariots ou un capteur à déclenchement de type assez simple. Ces capteurs peu coûteux exhibent toutefois des défauts, car ils ne donnent pas une information référencée de manière précise et n'offrent pas une correspondance parfaite avec la force de contact, leur calibration est susceptible de s'altérer avec le temps et doivent être protégés des poussières et des projections d'eau et/ou d'huile.

Par ailleurs, les systèmes à chariot flottant connus comportent un degré de liberté additionnel qui peut influencer la précision de la mesure. La course du chariot flottant est assez considérable et le temps nécessaire à la stabilisation du système ne permet pas d'effectuer des opérations de mesure rapides.
D'autres documents, par exemple DE3719509, décrivent des colonnes de mesure dans lesquelles la force de contact est déterminée par le couple du moteur d'entraînement. US2004221465 décrit un système de mesure de profils équipé d'un capteur de force, pouvant être une jauge de contrainte, et US4924598 décrit une colonne de mesure dans laquelle la force de mesure est déterminée par l'allongement d'un ressort, traduit en signal électrique par une jauge de contrainte.

On sait aussi que, pour certaines opérations de mesure ou de balayage, comme par exemple la recherche de minima, une liaison élastique entre le système de mesure et le système d'entrainement ralenti la mesure. Le dispositif à chariot flottant peut également être un élément de faiblesse lors des ajustements fins de la position de la touche, car le système n'offre pas assez de souplesse pour la mesure lorsque la force mesurée varie faiblement. Le système est alors obligé à rechercher continuellement des points d'équilibre de force constante, ce qui nécessite continuellement des périodes de stabilisation avant de fournir des informations de dimension.

Dans les colonnes de mesures à double chariot, les éléments élastiques nécessitent un réglage spécifique pour chaque orientation du système, en effet, le poids du chariot de mesure est maintenu en équilibre par ce système élastique et donc un changement d'orientation du système nécessite des modifications de ces éléments élastiques.

### Bref résumé de l'invention

Un but de la présente invention est de proposer un instrument de mesure de dimensions exempt des limitations des dispositifs connus. Selon l'invention, ces buts sont atteints notamment au moyen de l'objet de la revendication indépendante de dispositif 1. Les modes particuliers de réalisation de l'invention sont définis dans les revendications dépendantes 2 à 15.

Cette solution présente notamment l'avantage par rapport à l'art antérieur de convertir la force de contact directement en un signal électrique sans baser la mesure sur une mesure indirecte imprécise faite sur le déplacement relatif entre deux chariots. Ceci permet de mesurer réellement la force de contact exercée selon les axes observés et réduit avantageusement le nombre d'élément pouvant provoquer des erreurs. On obtient ainsi une structure plus compacte, plus rigide, une meilleure précision de mesure une réponse plus rapide aux variations de position et une bonne immunité aux projections.

L'instrument de l'invention comprend un capteur de force pour la mesure selon l'axe de déplacement et de mesure de l'instrument. Préférablement le capteur est précontraint, car il doit permettre de mesurer les variations de force dans les deux sens de déplacement. Cette configuration n'est pas limitative, car d'autres capteurs peuvent s'ajouter pour déterminer l'orientation de la force de contact selon les différents axes orthogonaux.

Par ailleurs, l'instrument de mesure de l'invention inclut une ou plusieurs connexions élastiques supplémentaires, ou un dispositif pour limiter la force d'entrainement au moyen d'un élément à friction, pour protéger le capteur de force. Un des premiers éléments élastiques supplémentaires qui se situe au niveau de la commande du système d'entrainement permet de limiter la force exercée par l'opérateur ou le moteur lorsque la touche entre en contact avec la pièce à mesurer. D'autres éléments élastiques peuvent s'ajouter en série du capteur de force pour augmenter la course élastique du système de mesure et ainsi protéger le capteur. Comme la déformation élastique n'influence pas la mesure de position, l'ajout de ces dispositifs de protection n'est pas limité. On pourra aussi ajouter des butées et/ou des éléments en parallèle du capteur de force pour ne pas dépasser la limite admissible de déformation du capteur et ainsi dévier les surcharges mécaniques.

La lecture directe de la force de contact permet une meilleure maîtrise de ce paramètre fondamental de la mesure. En effet la force de contact peut avoir une influence dimensionnelle sur certaines matières. Donc une mesure plus fine de la force de contact exercée permet d'interpoler à partir de plusieurs mesures des forces de contact différentes, l'élasticité de la matière mesurée, et aussi, de faire une extrapolation de la dimension réelle de la pièce mesurée, que l'on obtiendrait à une force de contact nulle qui correspondrait à une déformation élastique nulle. D'autre part, à force de contact nulle, la dimension de pièce à mesurer n'est plus influencée par des forces de contact parasites en cas de mesure de surfaces qui ne seraient pas orthogonales à l'axe de mesure de l'instrument.

Avantageusement, l'invention permet une recherche d'optimum améliorée, qui peut se faire autant par le suivi de la variation de force que par celui de la position. La valeur dimensionnelle mesurée n'est ainsi plus limitée uniquement à une force de contact prédéfinie. Le dispositif de l'invention peut corriger la mesure de dimension en fonction des variations de la force de contact, ce qui n'est pas possible avec les instruments de l'art antérieur. L'appareil tient aussi compte de chaque matière et optimise la correction de la valeur en fonction de l'élasticité de la matière sans nécessiter obligatoirement une correction de mécanique de la position.

Cette invention ne se limite pas à un système de mesure vertical, il peut aussi servir pour la mesure absolue ou relative selon un axe horizontal, ou même peut servir pour la mesure selon un axe quelconque dans le volume au bout d'un bras articulé par exemple. Grâce à sa grande finesse de mesure au niveau de la force de contact, il est possible de garantir une mesure dimensionnelle dans des orientations diverses sans perte de précision. Grâce à sa constitution rigide et simple la mesure linéaire n'est pas limitée uniquement à certaines orientations du système et l'orientation de la surface mesurée n'est plus limitée à des surfaces parallèles au plan de référence. Dans les différentes orientations l'effet du poids du chariot n'influence que le point de travail du capteur, sans nécessiter de modification des éléments élastiques. Le choix de la précontrainte du capteur de force peut être choisi de façon à répondre aux différentes orientations possibles sans nécessiter d'adaptation des points d'équilibres.

Les colonnes de mesure connues se limitent généralement à la mesure des surfaces parallèles au plan de référence. Quand un tel appareil mesure des surfaces qui ne rentrent pas dans cette catégorie ou qu'il n'est plus associé à un plan de référence, il doit pouvoir distinguer l'orientation de la force de contact. Sans cela, la force de contact peut dépasser la force mesurée par l'instrument selon son axe de mesure. D'autre part la dimension de l'élément de mesure, comme une touche de mesure sphérique, doit tenir compte de l'orientation de la surface pour tenir compte correctement de la dimension (projection) de la touche de mesure par rapport à l'axe de déplacement de l'instrument.

Dans une variante de l'invention non représentée, le système permet de distinguer l'orientation de la force de contact, normale à la surface mesurée, par rapport à l'axe de mesure de l'appareil. Il est donc capable de rechercher la force optimale de mesure qui correspond à une surface orthogonale à l'axe de mesure.

Dans une autre variante au moyen d'autres capteurs de force, il est capable de mesurer la force de contact selon chaque direction pour que la force exercée pendant la mesure soit adaptée à l'orientation de la surface.

### Brève description des figures

Des exemples de mise en oeuvre de l'invention sont indiqués dans la description illustrée par les figures annexées dans lesquelles :
La figure 1 illustre une vue d'ensemble d'une colonne de mesure selon un mode de réalisation de l'invention.

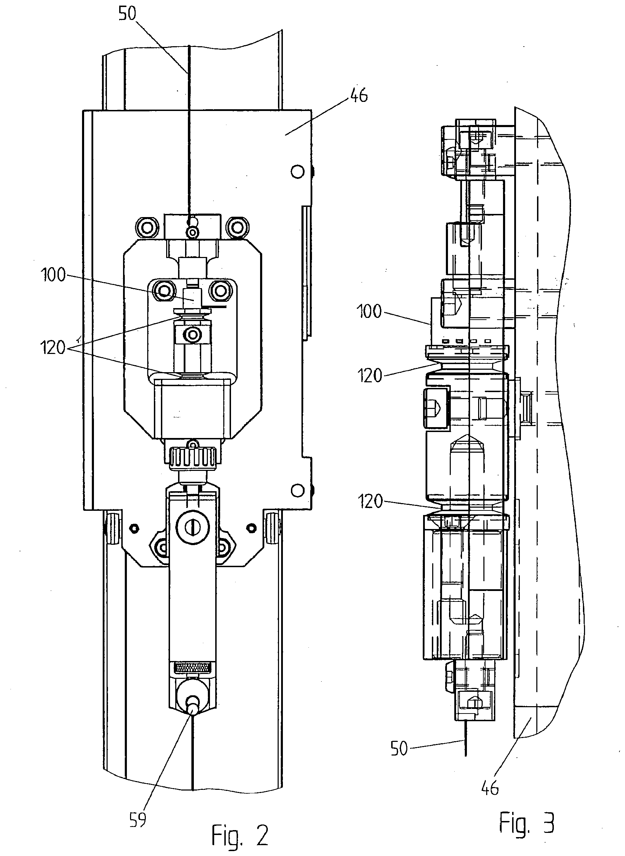

Les figures 2 et 3 montrent des détails du chariot de la colonne de mesure de la figure 1.
La figure 4 montre la colonne de la figure 1 en vue latérale.

### Exemple(s) de mode de réalisation de l'invention

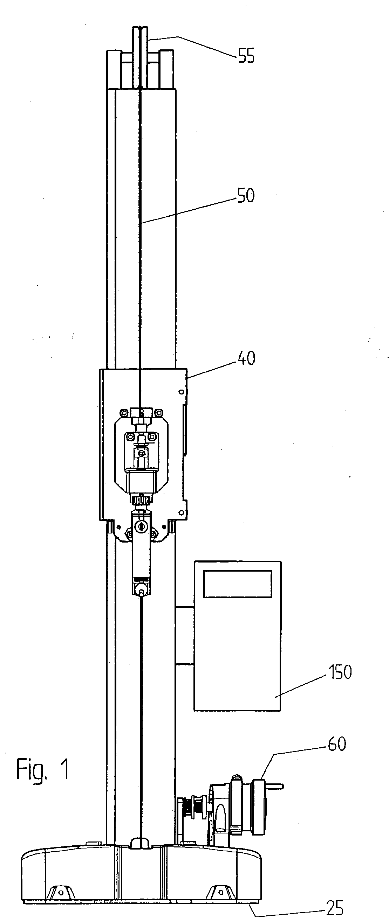

la colonne de mesure verticale de la figure 1, comprend une base d'appui 25 destinée à être appuyée sur un plan de référence, et un bâti vertical 30 comprenant une référence de position définissant un axe de mesure vertical. Le chariot 40 coulisse le long du bâti 30 et sa position est lue par un encodeur de position non visible sur la figure. Préférablement l'encodeur de position est un encodeur optique pouvant lire la position du chariot avec une précision de l'ordre ou supérieure au micromètre. D'autres systèmes de mesure de position sont toutefois possibles.

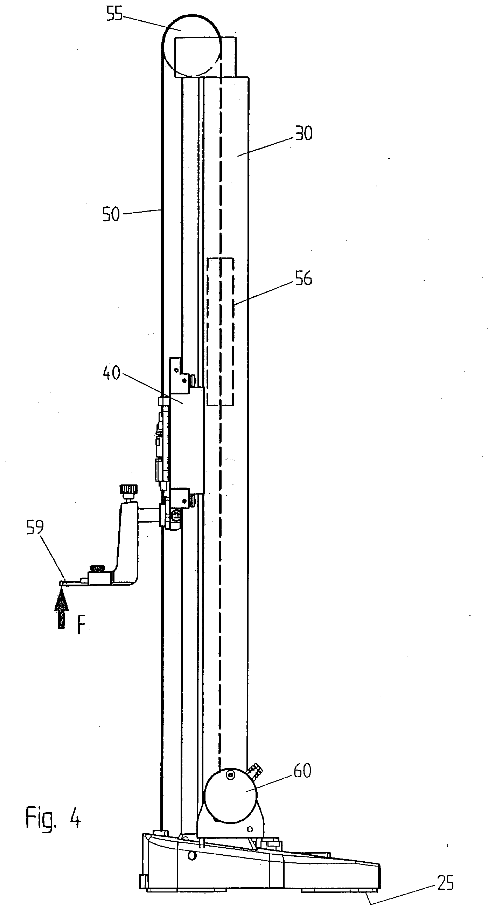

Le mouvement du chariot 40 est assuré au travers du capteur de force 100, par le câble 50 formant une boucle fermée autour de la poulie supérieure 55 et d'une poulie inférieure non visible. La poulie inférieure est entraînée par la manivelle 60 actionnable par l'opérateur et permettant le déplacement du chariot 40. Un contrepoids 56 (visible sur la figure 4) équilibre le poids du chariot. La touche 59, préférablement interchangeable, est amenée en contact avec les surfaces à mesurer.

Selon une variante non représentée de l'invention, le déplacement du chariot 40 est assuré par un moteur électrique entraînant la poulie inférieure ou la poulie supérieure avec des moyens partiellement élastiques. Optionnellement, le câble pourrait être remplacé par une courroie ou une bande métallique ou tout autre élément de transmission flexible idoine.

Le capteur de force 100 par exemple un système de jauges de contrainte, d'éléments piézorésistifs, une cellule de charge, ou un autre capteur idoine, ainsi qu'au moins un élément élastique 120 interposé de part et d'autre entre le câble 50 et le chariot 40. Les éléments élastiques 120 déterminent une précontrainte du capteur 100. Ce système consent la mesure de la force de contact dans les deux sens selon l'axe de mesure. La force de mesure appliquée sur la touche 59 est lue directement par le capteur. Ce dernier génère un signal électrique représentatif de la force de contact et transmet cette information au pupitre de mesure 150. Les éléments élastiques ont également une fonction de protection du capteur de force et augmentent, de façon contrôlée, la course du système.

Le pupitre de mesure 150 comprend préférablement des moyens d'affichage pour afficher automatiquement la dimension mesurée selon l'axe de mesure et la force de contact mesurée par le capteur, des moyens d'introduction de commandes et de données, par exemple un clavier. Préférablement, le pupitre de mesure 150 comprend un avertisseur acoustique pour signaler à l'opérateur que la force mesurée a atteint la valeur cible souhaité et mémorise la mesure de hauteur correspondant à cette force de contact souhaitée. Plus préférablement, le pupitre de mesure inclut des moyens de calcul, par exemple un processeur numérique, arrangé pour lire les données provenant de l'encodeur de position du chariot 40 et du capteur de force 100 et fournir des résultats de mesure selon des programmes stockés dans sa mémoire par exemple diamètres, centre, recherche de points de rebroussement, parallélisme, mesure d'élasticité, recherche d'orientation de la surface mesurée, etc.

Dans la variante illustrée, le pupitre de mesure comporte 150 un boîtier dans lequel sont logées toutes ses composantes : affichage, clavier, processeur, etc. Toutefois cela n'est pas une caractéristique limitative de l'invention, laquelle comprend aussi des instruments de mesure dans lesquels ces composantes sont disposées différemment, par exemple dans la base ou dans le bâti, ou dans des dispositifs externes connectés à l'instrument de mesure, par exemple un ordinateur.

Dans la version motorisée de l'invention, le pupitre de mesure comprend aussi une unité de contrôle du moteur d'entraînement qui pilote le moteur en fonction des programmes, par exemple en fonction du signal électrique de force du capteur 100. L'unité de contrôle est par exemple programmée pour stabiliser la force de contact mesurée par le capteur de force à une valeur prédéterminée. La version manuelle de l'invention comprend préférablement une manivelle avec un accouplement élastique qui donne un feedback tactile de la force de contact à l'opérateur.

Selon une variante de l'invention, l'unité de contrôle est programmée de manière à permettre des mesures de position selon différents modes de mesure, caractérisés par différente methode de gestion de la force de contact. Principalement, on distingue 3 modes des fonctionnements, le mode valeurs prédéfinies, le mode entre intervalles, et le mode à valeur instantanée ou une combinaison de ces modes.
Le mode à valeurs prédéfinies permet de mesurer avec des valeurs de force fixes ou fixées par l'opérateur. La mesure de position est effectuée lorsque la force est atteinte et stabilisée.
Le mode entre intervalles permet une mesure rapide sans rechercher une mesure de force de contact trop précise. Ce mode est comparable au précédant et nécessite moins de temps de stabilisation.
Le mode à valeur instantanée permet à l'opérateur de faire une mesure rapide dès le contact avec la pièce. Il obtient ainsi la mesure de la force et de la position, au moment qu'il déclenche la mesure.
Un mode mixte s'obtient par exemple par combinaison du seuil de déclenchement entre intervalles et de la mesure instantanée, qui permet de connaître les couples force/position, tout en restant dans des intervalles de valeur de force de contact prédéterminées.

Selon une variante préférentielle de l'invention, l'unité de contrôle est programmée pour déterminer plusieurs mesures pour un même point de contact par différentes valeurs de force de contact, et ainsi cela permet d'extrapoler une mesure correspondante à une force de contact égal à zéro. Cela permet aussi de déterminer le type de matière et permet aussi de mesurer l'élasticité de la matière mesurée. Il est aussi possible de partir d'une valeur d'élasticité prédéterminée et de rechercher la normale à la surface mesurée en comparant les variations de valeur d'élasticité mesurées en différents points de contact avec des mesures à différentes forces de contact. Ce qui permet ensuite de tenir compte de la dimension de la touche dans la direction de contact projetée sur l'axe de mesure.

Selon une variante de l'invention, le système de fixation de la touche comprend au moins un second capteur de force pour la mesure des forces orthogonales à l'axe de mesure de l'instrument. Ainsi il est possible de déterminer l'orientation de l'axe normal à la surface mesurée par rapport à l'axe de mesure. Ceci permet donc de maintenir la force de contact à des valeurs connues vu qu'elle ne se confond plus avec la force mesurée selon l'axe de déplacement de l'instrument. Ce système permet de tenir compte de la dimension correcte de la touche observée sur l'axe de mesure quelle que soit l'orientation le surface mesurée.

Selon une variante de l'invention, le programme de mesure effectue une série de mesures successives selon chaque axe orthogonal pour ensuite obtenir des coordonnées de points dans une représentation bidimensionnelle ou tridimensionnelle.

Selon une variante de l'invention, le programme de mesure effectue des mesures relatives à partir de points de références connus de la pièce à mesurer. L'orientation de l'instrument est choisie de manière à ce que les points à mesurer se trouvent sur l'axe de déplacement de l'instrument, ce qui permet d'optimiser le temps de contrôle en tenant compte de l'orientation de chaque surface mesurée.

### Numéros de référence employés sur les figures

- 25: Base d'appui
- 30: Bâti
- 40: Chariot
- 50: Câble
- 55: Poulie supérieure
- 60: Manivelle
- 56: Contrepoids
- 59: Touche
- 100: Capteur de force
- 120: Éléments élastiques
- 150: Pupitre de mesure

## Revendications

1. Instrument de mesure de dimension consistant en une colonne de mesure de dimension verticale, comprenant :
un guide linéaire vertical (30) connecté verticalement à une base d'appui (25) comprenant une référence de position définissant un axe de mesure vertical ;
un chariot mobile (40) pouvant coulisser parallèlement le long dudit guide (30) ;
un dispositif d'entraînement (50) relié au chariot mobile (40) par une transmission, de manière à pouvoir déterminer le déplacement linéaire du chariot mobile (40);
une touche (59) attachée audit chariot mobile (40) et destinée à entrer en contact avec une pièce à mesurer ;
un transducteur de position, agencé sur le chariot mobile (40) de manière à fournir une mesure de la position de la touche (59) relativement à l'axe de mesure ; le chariot mobile (40) étant relié au dispositif d'entraînement (50) au travers d'au moins un capteur de force (100) capable de mesurer la force de contact exercée par la touche (59) sur la pièce mesurée ;
le capteur de force étant assemblé dans un dispositif de montage comprenant un ou plusieurs éléments élastiques (120) interposés de part et d'autre entre le dispositif d'entraînement (50) et le chariot mobile (40),
**caractérisé en ce que :**
le capteur de force (100) est constitué par un système de jauges de contrainte, ou d'éléments piézorésistifs, ou par une cellule de charge, ledit un ou plusieurs éléments élastiques (120) et le capteur de force (100) opérant en série de sorte que le coulissement du chariot (40) est assuré par le dispositif d'entraînement (50) au travers du capteur de force (100), lesdit un ou plusieurs éléments élastiques (120) déterminant une précontrainte du capteur de force (100) et augmentant la course élastique entre le dispositif d'entraînement (50) et le chariot mobile (40) pour obtenir une mesure selon chaque sens de déplacement sur l'axe de mesure et pour protéger le capteur de force (100) contre les surcharges mécaniques.

2. Instrument de mesure selon la revendication précédente, comprenant un moteur agissant sur ou compris dans ledit dispositif d'entraînement (50), et une unité de contrôle (150) arrangée pour piloter le moteur en fonction de la mesure de la force de contact.

3. Instrument de mesure selon la revendication précédente, dans lequel l'unité de contrôle (150) est arrangée pour stabiliser la force de contact mesurée à une valeur prédéterminée.

4. Instrument de mesure selon l'une des revendications de 1 à 3, dans lequel le dispositif d'entraînement (50) est actionnable manuellement par un opérateur, comprenant un dispositif d'affichage capable d'indiquer à l'opérateur la force de contact exercée.

5. Instrument de mesure selon l'une des revendications précédentes, arrangé pour rechercher automatiquement un point de rebroussement de la touche de palpage.

6. Instrument de mesure selon l'une des revendications précédentes, arrangé pour déterminer plusieurs mesures de hauteur d'une pièce par plusieurs valeurs de force de contact, et pour extrapoler une mesure correspondante à une force de contact égal à zéro.

7. Instrument de mesure selon l'une des revendications 2 à 6, dans lequel l'unité de contrôle (150) est programmée de manière à permettre des mesures de position selon différents modes de mesure, **caractérisés par** différentes méthodes de gestion de la force de contact.

8. Instrument selon la revendication précédente, **caractérisé en ce que** la force est soit une valeur prédéterminée, soit dans un intervalle prédéterminé, soit une valeur instantanée.

9. Instrument de mesure selon l'une des revendications précédente, **caractérisé en ce que** le capteur de force (100) est protégé contre les surcharges mécaniques par des butées et/ou des éléments élastiques augmentant la course du système.

10. Instrument de mesure selon l'une des revendications précédentes, capable de déterminer et de minimiser la déformation élastique de la pièce à mesurer.

11. Instrument de mesure selon l'une des revendications précédentes, comprenant au moins un second capteur de force agencé selon un des axes orthogonaux à l'axe de mesure de l'instrument, pour déterminer l'orientation de la force de contact.

12. Instrument de mesure selon l'une des revendications précédentes, capable de déterminer l'orientation de la surface de la pièce à mesurer.

13. Instrument de mesure selon la revendication précédente, permettant de mesurer les dimensions dans des orientations quelconques de l'instrument.

14. Instrument de mesure selon l'une des revendications précédentes, permettant de mesurer des éléments non orthogonaux à l'axe de mesure de l'appareil.

15. Instrument de mesure selon l'une des revendications précédentes, ledit transducteur de position comprenant un capteur optique.

## Patentansprüche

1. Instrument zur Messung von Abmessungen, bestehend aus einer vertikalen Messsäule, umfassend:
eine senkrechte lineare Führung (30), welche vertikal mit einer Stützauflage (25) verbunden ist und eine Positionsreferenz aufweist, welche eine vertikale Messachse definiert;
ein Fahrgestell (40), welches parallel entlang der besagten Führung (30) bewegbar ist;
eine Antriebsvorrichtung (50), welche durch ein Getriebe mit dem Fahrgestell (40) verbunden ist, so dass die lineare Verschiebung des Fahrgestells (40) bestimmt werden kann;
eine Sonde (59), welche am besagten Fahrgestell (40) angebracht ist und dazu bestimmt ist, mit einem zu messenden Stück in Kontakt zu kommen;
einen am Fahrgestell (40) angeordneten Positionsgeber zur Bereitstellung einer Messung der Position der Sonde (59) in Bezug zur Messachse,
wobei das Fahrgestell (40) mit der Antriebsvorrichtung (50) über mindestens einen Kraftsensor (100) verbunden ist, welcher in der Lage ist, die durch die Sonde (59) auf dem gemessenen Stück ausgeübte Kontaktkraft zu messen;
wobei der Kraftsensor in einer Montagevorrichtung aus einem oder mehreren elastischen Elementen (120), welche auf beiden Seiten zwischen der Antriebsvorrichtung (50) und dem Fahrgestell (40) angeordnet sind, zusammengefügt ist,
**dadurch gekennzeichnet, dass**
der Kraftsensor (100) aus einem System von Dehnmessstreifen, oder von piezo-resistiven Elementen, oder aus einer Kraftmessdose, wobei das besagte eine oder die besagten mehreren elastischen Elemente (120) und der Kraftsensor (100) seriell funktionieren, so dass die Gleitbewegung des Fahrgestells (40) durch die Antriebsvorrichtung (50) mittels des Kraftsensors (100) gewährleistet wird, wobei das besagte eine oder die besagten mehreren elastischen Elemente (120) eine Vorspannung des Kraftsensors (100) bestimmen und den elastischen Hubweg zwischen der Antriebsvorrichtung (50) und dem Fahrgestell (40) erhöhen, um eine Messung in jeder Bewegungsrichtung auf der Messachse zu erhalten, und um den Kraftsensor (100) gegen mechanische Überlastungen zu schützen.

2. Messinstrument gemäss dem vorhergehenden Anspruch, mit einem Motor, der auf die Antriebsvorrichtung (50) einwirkt oder in dieser enthalten ist, und einer Steuereinheit (150), welche so angeordnet ist, dass sie den Motor entsprechend der Messung der Kontaktkraft steuert.

3. Messinstrument gemäss dem vorhergehenden Anspruch, worin die Steuereinheit (150) derart eingerichtet ist, um die gemessene Kontaktkraft auf einen vorbestimmten Wert zu stabilisieren.

4. Messinstrument gemäss einem der Ansprüche 1 bis 3, worin die Antriebsvorrichtung (50) von einer Bedienungsperson manuell betätigbar ist, mit einer Anzeigevorrichtung, die in der Lage ist, dem Bediener die ausgeübte Kontaktkraft anzuzeigen.

5. Messinstrument gemäss einem der vorhergehenden Ansprüche, eingerichtet zum automatischen Suchen nach einem Umkehrpunkt der Tastsonde.

6. Messinstrument gemäss einem der vorhergehenden Ansprüche, eingerichtet zum Bestimmen mehrerer Messungen der Höhe eines Stücks durch mehrere Werte der Kontaktkraft und zum Extrapolieren einer Messung entsprechend einer Kontaktkraft gleich Null.

7. Messinstrument gemäss einem der Ansprüche 2 bis 6, worin die Steuereinheit (150) so programmiert ist, dass sie Positionsmessungen nach verschiedenen Messmodi ermöglicht, die sich durch unterschiedliche Methoden zur Steuerung der Kontaktkraft auszeichnen.

8. Messinstrument gemäss dem vorhergehenden Anspruch, **dadurch gekennzeichnet, dass** die Kraft entweder ein vorbestimmter Wert, oder ein vorbestimmtes Intervall, oder ein Momentanwert ist.

9. Messinstrument gemäss einem der vorhergehenden Ansprüche, **dadurch gekennzeichnet, dass** der Kraftsensor (100) gegen mechanische Überlastungen durch Anschläge und/oder elastische Elemente, welche den Hubweg des Systems erhöhen, geschützt ist.

10. Messinstrument gemäss einem der vorhergehenden Ansprüche, das in der Lage ist, die elastische Verformung des zu messenden Stücks zu bestimmen und zu minimieren.

11. Messinstrument gemäss einem der vorhergehenden Ansprüche, umfassend mindestens einen zweiten Kraftsensor, der entlang einer der Achsen orthogonal zur Messachse des Instruments angeordnet ist, um die Ausrichtung der Kontaktkraft zu bestimmen.

12. Messinstrument gemäss einem der vorhergehenden Ansprüche, welches in der Lage ist, die Orientierung der Oberfläche des zu messenden Stücks zu bestimmen.

13. Messinstrument gemäss dem vorhergehenden Anspruch, welches das Messen der Abmessungen in beliebigen Orientierungen des Instruments erlaubt.

14. Messinstrument gemäss einem der vorhergehenden Ansprüche, welches das Messen von Elementen, welche nichtorthogonal zur Messachse der Vorrichtung sind, erlaubt.

15. Messinstrument gemäss einem der vorhergehenden Ansprüche, wobei der besagte Positionsgeber einen optischen Sensor umfasst.

## Claims

1. Instrument for measuring dimensions, consisting in a vertical dimension-measuring column, including:
a vertical linear guide (30) connected vertically to a support base (25) comprising a position reference defining a vertical measuring axis;
a mobile carriage (40) capable of sliding in parallel along said guide (30);
a driving device (50) connected to the mobile carriage (40) by a transmission, so as to be able to determine the linear displacement of the mobile carriage (40);
a feeler (59) attached to said mobile carriage (40) and designed to come into contact with a part to be measured;
a position transducer, arranged on the mobile carriage (40) so as to supply a measurement of the position of the feeder (59) relative to the measuring axis;
the mobile carriage (40) being connected to the driving device (50) through at least one force sensor (100) capable of measuring the contact force exerted by the probe (59) on the part measured;
the force sensor being assembled in an assembly device comprising one or several elastic elements (120) interposed on one side and the other between the driving device (50) and the mobile carriage (40),
**characterized in that**
the force sensor (100) is constituted by a system of strain gauges or piezo-resistive elements, or by a load cell, said one or several elastic elements (120) and the force sensor (100) operating in series so that the sliding of the carriage (40) is ensured by the driving device (50) through the force sensor (100), said one or several elastic elements (120) determining a pre-stressing of the force sensor (100) and increasing the elastic run between the driving device (50) and the mobile carriage (40) to obtain a measurement according to each direction of displacement on the measuring axis and to protect the force sensor (100) against mechanical overloads.

2. Measuring instrument according to the preceding claim, comprising a motor acting on or comprised in said driving device (50), and a control unit (150) arranged so as to control the motor according to the measurement of the contact force.

3. Measuring instrument according to the preceding claim, wherein the control unit (150) is arranged to stabilize the contact force measured at a predetermined value.

4. Measuring instrument according to one of the claims 1 to 3,
wherein the driving device (50) can be actuated manually by an operator, comprising a display device capable of indicating to the operator the contact force exerted.

5. Measuring instrument according to one of the preceding claims, arranged for automatically seeking a return point of the feeler probe.

6. Measuring instrument according to one of the preceding claims, arranged for determining several height measurements of a part through several contact force values and for extrapolating a measurement corresponding to a contact force equal to zero.

7. Measuring instrument according to one of the claims 2 to 6,
wherein the control unit (150) is programmed so as to enable the position to be measured according to different measuring modes, **characterized by** different methods for managing the contact force.

8. Instrument according to the preceding claim, **characterized in that** the force is either a predetermined value or in a predetermined interval or an instantaneous value.

9. Measuring instrument according to one of the preceding claims, **characterized in that** the force sensor (100) is protected against mechanical overloads by stops and/or elastic elements increasing the system's running length.

10. Measuring instrument according to one of the preceding claims, capable of determining and minimizing the elastic deformation of the part to be measured.

11. Measuring instrument according to one of the preceding claims, comprising at least one second force sensor arranged along one of the axes orthogonal to the instrument's measuring axis for determining the orientation of the contact force.

12. Measuring instrument according to one of the preceding claims, capable of determining the orientation of the surface of the part to be measured.

13. Measuring instrument according to the preceding claim, enabling the dimensions in any orientations whatsoever of the instrument to be measured.

14. Measuring instrument according to one of the preceding claims, enabling elements not orthogonal to the device's measuring axis to be measured.

15. Measuring instrument according to one of the preceding claims, said position transducer comprising an optical sensor.
